# EUROPEAN PATENT SPECIFICATION

(11) **EP 0 298 511 B1**
(45) Date of publication and mention of the grant of the patent: **29.09.1993**
(21) Application number: 88110969.8
(22) Date of filing: 08.07.1988
(51) Int. Cl.: G01C 19/56

(54) **Vibration gyro**
Oszillierender Kreisel
Gyroscope à rotor vibrant

(30) Priority: 10.07.1987 JP 172633/87; 10.07.1987 JP 172634/87
(43) Date of publication of application: 11.01.1989
(73) Proprietor: NEC HOME ELECTRONICS, LTD., Osaka-Shi Osaka (JP); NEC CORPORATION, Tokyo (JP)
(72) Inventor: Kumasaka, Toru c/o NEC Home Electronics Ltd., Yodogawa-ku Osaka-shi Osaka (JP); Fujimura, Seiichi NEC Home Electronics Ltd., Yodogawa-ku Osaka-shi Osaka (JP); Yamada, Hiroaki c/o NEC Corporation, Minato-ku Tokyo (JP)
(74) Representative: DIEHL GLAESER HILTL & PARTNER

(56) References cited:
- DE-A- 3 417 858
- US-A- 3 241 377
- US-A- 4 653 325
- US-A- 4 703 655

## Description

The present invention relates to a vibration gyro in accordance with the precharacterizing clause of claim 1.

A vibration gyro of said type is disclosed in the US-A-4703655 (& JP-A-62038313, publ. 19.02.1987). The US-A-3241377 shows an apparatus for detecting angular motion having piezo-electric detecting means mounted on opposite side walls of platelike supporting means.

A vibration gyro operates upon the principle that Coriolis' force is produced when an angular velocity is applied to a body moving at a speed. That is, a velocity is given to a body by vibrating it, and Coriolis' force produced when an angular velocity is applied to the body thus vibrated is detected as a displacement of the body, so that the angular velocity is detected. When compared with a known rate gyro based on an angular momentum of a rotating body, the vibration gyro is advantageous in that its service life is long because it has no wearing components such as bearings, and its power consumption is low because it employs piezo-electric elements for a drive and a detection as described later.

Examples of the body for applying vibration, namely a vibrator in the vibration gyro are a tuning-fork-shaped vibrator, an H-shaped vibrator, and the like.

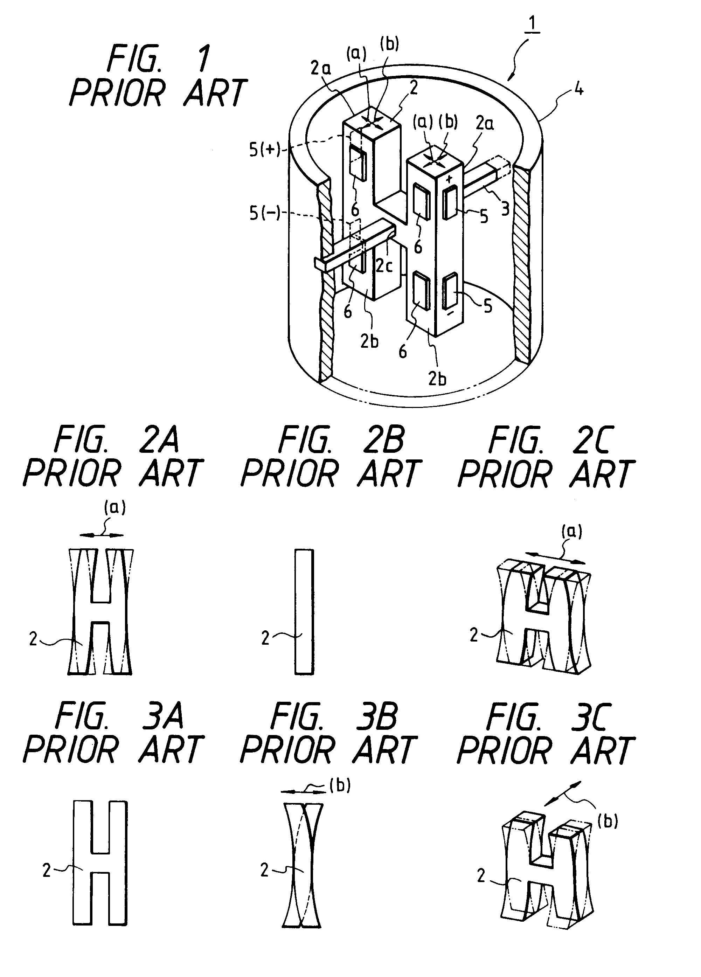

A conventional H-shaped vibrator operated vibration gyro is as shown in FIG. 1. The vibration gyro has the following structure: A supporting bar 3 penetrates the H-shaped vibrator 2 at the center in the direction of thickness (or in the direction of the arrow (b)), and its two ends are fixedly secured to a cylindrical casing 4. Four driving piezo-electric elements 5 are mounted on two side walls 2a and 2a, in the direction of width, of the vibrator 2. More specifically, two driving piezo-electric elements 5 are mounted on the upper and lower portions of each of the two side walls 2a, respectively. Furthermore, four detecting piezo-electric elements 6 are mounted on four portions - upper and lower, and right and left - of an H-shaped front wall of the vibrator 2 which is perpendicular to the two side walls 2a, respectively, in such a manner that they make pairs with the driving piezo-electric elements 5. It should be noted that the driving piezo-electric elements 5 are arranged in such a manner that the upper driving piezo-electric elements are equal in polarity to each other, and the lower driving piezo-electric elements elements are also equal in polarity to each other, and the upper driving piezo-electric elements are opposite in polarity to the lower driving piezo-electric elements, as indicated by the symbols (+) (-) in FIG. 1.

When alternating voltages are applied to the four driving piezo-electric elements 5 in the conventional vibration gyro 1 thus constructed in such a manner that the alternating voltages applied to the right and left elements 5 are the same in polarity while those applied to the upper and lower elements 5 are opposite in polarity, the vibrator 2 is vibrated in the direction of width (or in the direction of the arrow (a)). When, under this condition, an angular velocity is applied to the vibration gyro 1 by rotation in a plane (a horizontal plane) perpendicular to the axis of the casing 4, then Coriolis' force is produced in the direction of thickness of the vibrator (or in the direction of the arrow (b), thus bending the vibrator 2. As a result, voltages are generated by the detecting piezo-electric elements 6. The deformation of the vibrator 2 is detected from the detecting voltage signals, Coriolis' force applied to the vibrator 2 is detected from the deformation, and the angular velocity applied to the vibration gyro is detected from Coriolis' force. The angle of rotation is calculated by integrating the angular velocities.

In the above-described operation, the vibrator 2 is vibrated as follows: That is, the vibration mode of the driving piezo-electric elements is such that, as shown in FIGS. 2A, 2B and 2C, the elements are vibrated in the direction of width of the vibrator 2 (or in the direction of the arrow (a)), and the right and left elements are deformed symmetrical while the upper and lower elements are deformed toward opposite side to each other; whereas the vibration mode of the detecting piezo-electric elements is such that, as shown in FIGS. 3A, 3B and 3C, the elements are vibrated in the direction of thickness of the vibrator 2 (or in the direction of the arrow (b)), and the upper and lower elements are deformed toward opposite side to each other, and the right and left elements are deformed toward opposite side to each other.

In the above-described conventional vibration gyro 1, the driving piezo-electric elements 5 and the detecting piezo-electric elements 6 are mounted to one and the same vibrator 2 in such a manner that they are adjacent to one another. Therefore, the leakage of the voltage applied to a driving piezo-electric element 5 may actuate the detecting piezo-electric element 6 adjacent thereto through the electrostatic capacity between the elements 5 and 6, as a result of which the detecting voltage signal of the detecting piezo-electric element 5 would include an error signal. When the vibrator 2 is bent while driven by the driving piezo-electric 5, the detecting piezo-electric elements 6 are distorted. This distortion causes the detecting piezo-electric elements 6 to generate undesired voltages and, accordingly, the detecting voltage signals of the element 6 would be erroneous. Thus, the leakage of the driving voltage, and the distortion of the detecting piezo-electric elements 6 caused by the driving of the vibrator lead to errors in the detection values of the vibration gyro.

Accordingly, an object of the present invention is to eliminate the above-described difficulties accompanying a conventional vibration gyro.

More specifically, an object of the invention is to provide a vibration gyro in which error voltages unrelated to Coriolis' force are scarcely generated by the detecting piezo-electric elements. These objects are solved by a gyro as described in the independent claim. Further advantageous features of the gyro are described in the independent claims.

In order to attain the above described objects of the present invention, in a vibration gyro, driving piezo-electric elements provided on a vibrator are equal in polarity to one another, and detecting piezo-electric elements for detecting Coriolis' force are mounted distantly from the driving piezo-electric elements, such as on a supporting bar, for example.

Furthermore in the vibration gyro of the invention, the second mode natural vibration frequency of the supporting bar is made coincident with the first mode natural vibration frequency, that is a drive vibration frequency, of the vibrator.

When, in the vibration gyro thus constructed, alternating voltages are applied to the driving piezo-electric elements arranged equal in polarity, the H-shaped vibrator is bent symmetrical both in horizontal and in vertical directions as viewed from front; that is, it is vibrated in the first vibration mode. When, under this condition, an angular velocity in a horizontal plane is applied to the vibrator, Coriolis' forces applied to the vibrator becomes a couple of forces, which turns the vibrator about the vertical axis. As a result, the supporting bar supporting the vibrator is bent by the couple of forces, thus being vibrated in the second vibration mode. The detecting piezo-electric elements detect the bend of the supporting bar, thus detecting Coriolis' forces.

In the above-described detecting operation, the leakage of the driving voltage will not act on the detecting piezo-electric elements, and the driving of the vibrator will not bend the detecting piezo-electric elements, because the driving piezo-electric elements and the detecting piezo-electric elements are provided distantly from each other, that is, the former are mounted on the vibrator, whereas the latter are mounted on the supporting bar. Accordingly, the generation of the erroneous voltages unrelated to Coriolis' forces can be prevented.

Furthermore, since the second mode natural vibration frequency of the supporting bar is coincident with the first mode natural vibration, that is a drive vibration frequency, of the vibrator, the detecting member (or the supporting bar) resonates with the driving member vibrator), as a result of which the detecting member (or the supporting bar) is greatly bent; that is, the detecting piezo-electric elements provide large detecting signals.
FIG. 1 is a perspective view, with parts cut away, showing a conventional vibration gyro.
FIGS. 2A, 2B and 2C are diagrams for a description of the vibration mode of the driving side in the conventional vibration gyro.
FIGS. 3A, 3B and 3C are diagrams for a description of the vibration mode of the detecting side in the conventional vibration gyro.
FIG. 4 is a perspective view, with parts cut away, showing a first example of a vibration gyro according to this invention.
FIG. 5 is a plan view of the vibration gyro shown in FIG. 4.
FIG. 6 is is a sectional view taken along line VI-VI in FIG. 5.
FIG. 7 is a sectional view taken along line VII-VII in FIG. 5.
FIGS. 8A, 8B and 8C are diagrams for a description of the driving side of a vibrator in the vibration gyro. More specifically, FIGS. 8A, 8B and 8C are a front view, a side view and a perspective view of the vibrator, respectively.
FIGS. 9A, 9B and 9C are diagrams for a description of the vibration mode of the detecting side of the vibrator. More specifically, FIGS. 9A, 9B and 9C are a front view, a side view and a perspective view of the vibrator, respectively.
FIGS. 10 A and 10B are explanatory diagrams for a description of the action of Coriolis' force.
FIG. 11 is a perspective view, with parts cut away, showing a second example of the vibration gyro according to the invention.
FIG. 12 is a plan view of the vibration gyro shown in FIG. 11.
FIG. 13 is a is a sectional view taken along line XIII-XIII in FIG. 12.
FIG. 14 is a sectional view taken along line XIV-XIV in FIG. 12.

Preferred embodiments of the present invention will now be described in detail with reference to accompanying drawings.

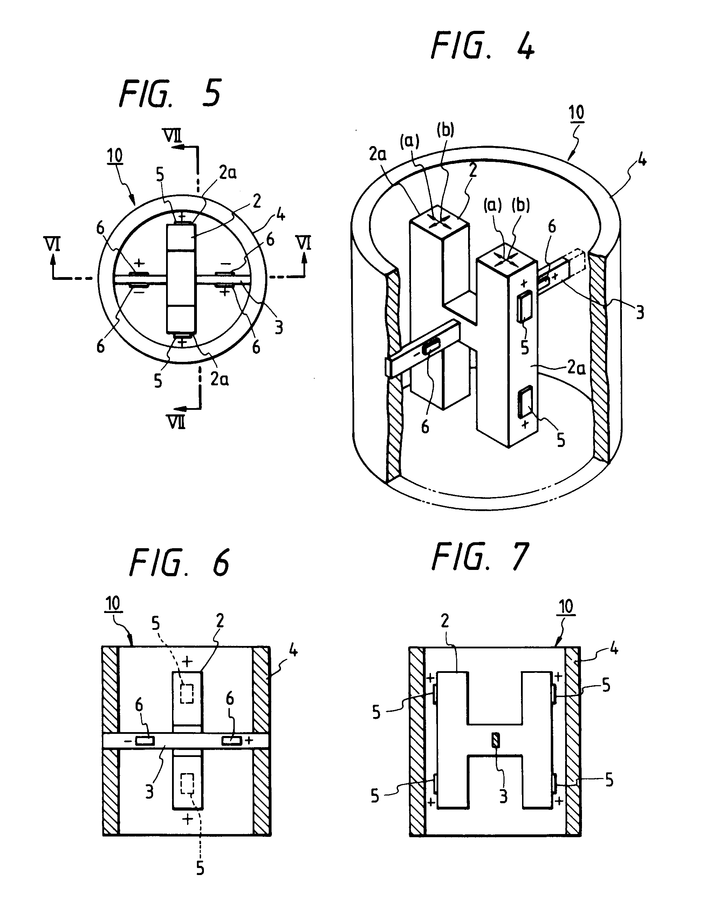

A first embodiment of a vibration gyro according to the present invention will be described with reference to FIGS. 4 through 10.

As shown in FIGS. 4 through 7, in the vibration gyro 10, like the above-described conventional one, a supporting bar 3 penetrates an H-shaped vibrator 2 at a center in a direction of thickness direction (or in the direction of the arrow (b)), and its two ends are fixedly secured to a cylindrical casing 4, and four driving piezo-electric elements 5 are mounted on upper and lower portions of two sides walls 2a and 2a of the vibrator 2.

The four driving piezo-electric elements 5 are so arranged that they are all the same in polarity (as indicated by the symbol (+)), and detecting piezo-electric elements 6 are mounted on the supporting bar 3. In the vibration gyro of the invention, in order to improve the Coriolis' force detecting sensitivity, the thickness of the supporting bar 3 (measured in the direction of the arrow (a)) is made smaller than that of the conventional one so that the supporting bar is a plate-like bar. Two detecting piezo-electric elements 6 are mounted on two opposite side walls of the supporting bar 3, respectively, at each of the front and rear halves thereof; that is, as shown in FIGS. 5 and 6, four detecting piezo-electric elements 6 are mounted on the supporting bar 3 in such a manner that two elements 6 confronted through the supporting bar 3 with each other are opposite in polarity to each other, and two elements 6 provided on one and the same side wall are opposite in polarity to each other, so that the bend, in a horizontal plane, of the supporting bar 3 can be effectively detected.

The operation of the vibration gyro thus constructed will be described hereinbelow.

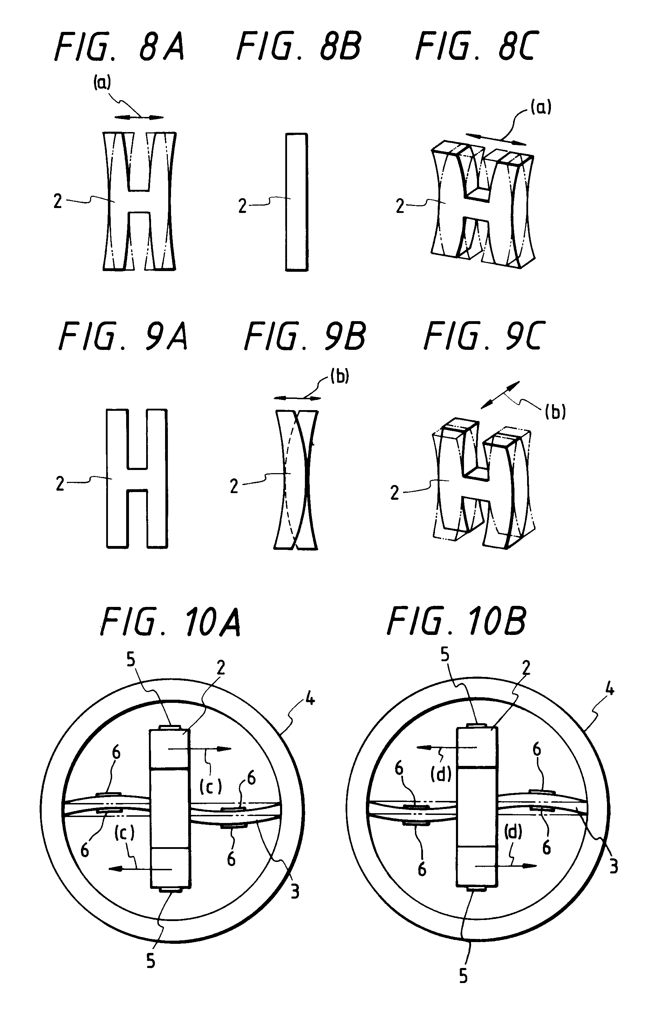

When alternating voltages equal in polarity are applied to the four driving piezo-electric elements 5, the vibration mode is as shown in FIGS. 8A, 8B and 8C; that is, the H-shaped vibrator 2 is vibrated in the direction of width (or in the direction of the arrow (a)) in such a manner that its four end portions bearing the four driving piezo-electric elements 5 are bent symmetrical both in horizontal and vertical directions as viewed from front. When, under this condition, an angular velocity is applied to the vibration gyro 10 by rotation in a plane (or a horizontal plane) perpendicular to the axis of the casing 4, Coriolis' forces act on the the vibrator 2 in the direction of thickness ( or in the direction of the arrow (b)). These forces, as indicated by the arrows (c) and (d) in FIGS. 10A and 10B, are opposite in width direction to each other (in each of the right and left sides of the H-shaped vibrator, the force which acts on the upper end portion is equal in direction to that which acts on the lower end portion). Coriolis' forces opposite in direction is a couple of forces to turn the vibrator 2 about a vertical axis (extended perpendicular to the surface of the drawing of FIGS. 10A and 10B), thus bending the supporting bar 3 in the horizontal plane as indicated by the solid lines in FIGS. 10A and 10B. As a result, voltages are generated by the detecting piezo-electric elements 6, the deformation of the supporting bar 3 is detected from the detecting voltage signals, Coriolis' forces applied to the vibrator 2 are detected from the deformation of the supporting bar 3, and the angular velocity applied to the vibration gyro is detected from the thus detected Coriolis' forces. In addition, the angle of rotation can be detected by integrating the angular velocities.

In this case, the vibration mode of the vibrator 2 by Coriolis' forces is as indicated in FIGS. 9A, 9B and 9C. That is, the vibrator is vibrated in the direction of thickness (or in the direction of the arrow (b)), and the right and left end portions of the H-shaped vibrator are bent in opposite directions, respectively, while, in each of the right and left sides of the H-shaped vibrator, the upper and lower end portions are bent in the same direction.

In the above-described detecting operation, the leakage of the voltages applied to the driving piezo-electric elements 5 mounted on the vibrato 2 does not act on the detecting piezo-electric elements 6 mounted on the supporting bar 3, and when the vibrator 2 is bent by the driving of the driving piezo-electric elements 5, the detecting piezo-electric elements 6 on the supporting bar 3 are not bent at all, and therefore no undesired voltage is produced. Thus, the generation of erroneous voltages by the detecting piezo-electric elements 6 which are unrelated to Coriolis' force is prevented.

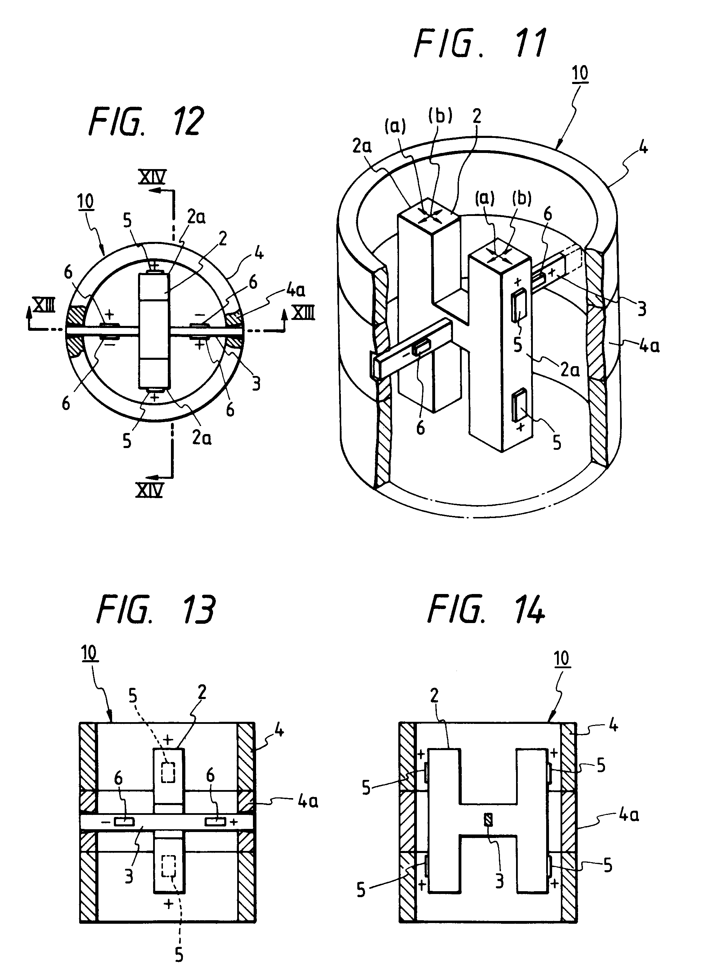

A second embodiment of the vibration gyro according to the present invention will be described with reference to FIGS. 11 through 14, in which those components which have been already described with reference to FIGS. 4 through 10 are therein designated by the same reference numerals or characters.

In the vibration gyro of the second embodiment of the invention, the supporting bar 3 is predetermined in sectional configuration and in length so that its second mode natural vibration frequency coincides with the first mode natural vibration frequency, that is a drive vibration frequency, of the vibrator 2. The thickness (measured in the direction of the arrow (a)) of the supporting bar 3 is made smaller so that the natural vibration frequency can be obtained as desired. In the vibration gyro, the middle part of the casing 4 is made of vibration proof alloy so that the vibration gyro is free from the effect of external vibration noise from the outside such as a vibration of the vehicle when the gyro is mounted on the vehicle. That is, the supporting bar 3 is supported by a vibration proof alloy part 4a. More specifically, the supporting bar 3 is freely supported by the vibration proof alloy part 4a so that the second vibration mode of the supporting bar 3 may not be affected; that is, the supporting parts of the vibration proof alloy part 4a are tapered so that they are in linear contact with the supporting bar 3.

The operation of the vibration gyro thus constructed is substantially equal to that of the first embodiment described above. However, the second embodiment is advantageous in the following points when compared with the first embodiment.

In the second embodiment of the vibration gyro, the second mode natural vibration frequency of the supporting bar 3 coincides with the drive vibration frequency of the vibrator 2 (which is equal to the first mode natural vibration frequency of the vibrator 2) as is described above, and therefore the supporting bar resonates with the vibration of the vibrator 2, as a result of which the supporting bar 3 is maximumly bent, and the detecting piezo-electric elements 6 can provide large detection signals. That is, the vibration gyro of the second embodiment of the present invention is improved in Coriolis' force detecting sensitivity.

Being supported by the vibration proof alloy part 4a of the casing 4 as described above, the supporting bar 3 is scarcely affected by the external vibration noises. Furthermore, as the supporting parts of the vibration proof alloy part 4a are tapered to substantially freely support the supporting bar 3, the second vibration mode of the latter 3 is not affected.

It is preferable for accurate detection of the deformation of the supporting bar 3 that the arrangement and polarity of the detecting piezo-electric elements 6 are as described above; however, the invention is not limited thereto or thereby.

As is described above, in the vibration gyro of the invention, the four driving piezo-electric elements are mounted on the vibrator in such a manner that they are equal in polarity and the detecting piezo-electric elements for detecting Coriolis' forces are mounted on the supporting bar. Therefore, in the vibration gyro of the invention, the driving voltages will not leak to the detecting piezo-electric elements, and the driving of the vibrator will not distort the detecting piezo-electric elements, and therefore no erroneous voltages unrelated to Coriolis' force are generated by the detecting piezo-electric elements. Thus, the angular velocity detection accuracy of the vibration gyro is remarkably improved, according to the invention.

Furthermore, in the vibration gyro of the invention, the second mode natural vibration frequency of the supporting bar coincides with the first mode natural vibration frequency, that is the drive vibration frequency, of the vibrator, and therefore the detecting member (or the supporting bar) resonates with the driving member (or the vibrator). As a result, the detecting member (or the supporting bar) is greatly bent; that is, the detecting piezo-electric elements provide large detection outputs and thus, the Coriolis' force detecting sensitivity is improved.

## Claims

1. A vibration gyro comprising:
a) a cylindrical casing (4);
b) H-shaped vibrating means(2);
c) platelike supporting means (3) secured to said H-shaped vibrating means (2) being perpendicular thereto and being secured at both ends thereof to the cylindrical casing (4);
d) piezo-electric driving means (5) mounted to the side walls (2a) of said H-shaped vibrating means (2) and being connected to alternate voltages, and
e) piezo-electric detecting means (6) mounted on the platelike supporting means (3) for detecting bending forces occurring in said supporting means (3) due to Coriolis forces acting on the H-shaped vibrating means (2);
**characterized** by
f) four piezo-electric drive elements (5) mounted to the upper and lower end portions of said side walls of said H-shaped vibrating means (2) and applied with said alternating voltages of the same polarity at any time in order to cause the H-shaped vibrating means (2) to vibrate in the direction of width in such a manner that its four end portions bearing the four driving piezo-electric elements (5) are bent symmetrical both in horizontal and vertical directions as viewed from front;
g) said piezo-electric detecting means comprising four detecting piezo-electric elements (6) mounted on two opposite side walls of said supporting means (3); and
h) said detecting piezo-electric elements (6) being arranged so that two elements confronted through said supporting means (3) with each other are opposite in polarity, and two elements provided on the same side wall of said supporting means are opposite in polarity to each other.

2. The vibration gyro of claim 1, wherein said supporting means is a platelike bar (3) penetrating said H-shaped vibrating means (2) at its center in the direction of thickness.

3. The vibration gyro of claim 1 or 2, wherein the second mode natural vibration frequency of said supporting means (3) is coincident with the first mode natural frequency of said vibration means (2).

4. The vibration gyro of one of the preceding claims, wherein a part (4a) of said casing (4) by which said supporting means is supported is made of a vibration proof alloy.

5. The vibration gyro of claim 4, wherein said part (4a) is a middle part of said casing (4).

6. The vibration gyro of claim 4 or 5, wherein the supporting parts of said vibration proof alloy are tapered thereby obtaining a linear contact with said supporting means (3).

## Patentansprüche

1. Schwingkreisel mit
a) einem zylindrischen Gehäuse (4);
b) einem H-förmigen Schwingmittel (2);
c) einem plattenförmigen Stützmittel (3), das an dem senkrecht dazu verlaufenden H-förmigen Schwingmittel (2) befestigt ist und an seinen beiden Enden an dem zylindrischen Gehäuse (4) befestigt ist;
d) piezoelektrische Antriebsmittel (5), die an den Seitenwänden (2a) des H-förmigen Schwingmittels (2) angebracht und an Wechselspannungen angeschlossen sind, und
e) piezoelektrische Erfassungsmittel (6), die auf dem plattenförmigen Stützmittel (3) zum Erfassen von Biegekräften angebracht sind, die in dem Stützmittel (3) auf Grund der auf das H-förmige Schwingmittel (2) einwirkenden Corioliskräfte auftreten;
**gekennzeichnet durch**
f) vier piezoelektrische Antriebselemente (5), die auf den oberen und unteren Endabschnitten der Seitenwände des H-förmigen Schwingmittels (2) angebracht sind und an die zu jeder Zeit Wechselspannungen der gleichen Polarität angelegt sind, um das H-förmige Schwingmittel (2) derart in Breitenrichtung in Schwingung zu versetzen, daß, von vorne gesehen, seine vier Endabschnitte mit den vier darauf angebrachten piezoelektrischen Elementen (5) symmetrisch sowohl in die horizontale als auch in die vertikale Richtung gebogen werden;
g) die piezoelektrischen Erfassungsmittel, die vier piezoelektrische Erfassungselemente (6) aufweisen, welche an zwei gegenüberliegenden Seitenwänden des Stützmittels (3) angebracht sind; und
h) die piezoelektrischen Erfassungselemente (6), die so angeordnet sind, daß zwei sich durch das Stützmittel (3) gegenüberliegende Elemente von entgegengesetzter Polarität sind, und zwei Elemente, die auf der gleichen Seitenwand des Stützmittels liegen, von entgegengesetzter Polarität sind.

2. Schwingkreisel nach Anspruch 1, bei dem das Stützmittel ein plattenförmiger Stab (3) ist, der durch die Mitte des H-förmigen Schwingmittels (2) in Richtung der Dicke führt.

3. Schwingkreisel nach Anspruch 1 oder 2, bei dem die Eigenschwingungsfrequenz der zweiten Art des Stützmittels (3) mit der Eigenfrequenz der ersten Art des Schwingmittels (2) zusammenfällt.

4. Schwingkreisel nach einem der vorhergehenden Ansprüche, bei dem ein Teil (4a) des Gehäuses (4), durch das das Stützmittel gestützt ist, aus einer schwingungsfesten Legierung besteht.

5. Schwingkreisel nach Anspruch 4, bei dem der Teil (4a) ein Mittelteil des Gehäuses (4) ist.

6. Schwingkreisel nach Anspruch 4 oder 5, bei dem die Stützteile der schwingungsfesten Legierung konisch zulaufend sind, wodurch sie einen linearen Kontakt mit dem Stützmittel (3) erhalten.

## Revendications

1. Gyroscope à rotor vibrant comprenant :
a) un boîtier cylindrique (4) ;
b) un moyen vibrant en forme de H (2) ;
c) un moyen support (3) semblable à une plaque, fixé audit moyen vibrant en forme de H (2) perpendiculairement à celui-ci et fixé à ses deux extrémités au boîtier cylindrique (4) ;
d) des moyens d'entraînement piézo-électriques (5) montés sur les parois latérales (2a) dudit moyen vibrant en forme de H (2) et qui sont reliés à des tensions alternatives, et
e) des moyens de détection piézo-électriques (6) montés sur le moyen support (3) semblable à une plaque pour détecter les forces de courbage se produisant dans ledit moyen support (3) en raison des forces de Coriolis agissant sur le moyen vibrant en forme de H (2) ;
caractérisé par
f) quatre éléments d'entraînement piézo-électriques (5) montés sur les parties d'extrémité supérieures et inférieures desdites parois latérales dudit moyen vibrant en forme de H (2) et soumis auxdits tensions alternatives de même polarité à tout moment pour faire que le moyen vibrant en forme de H (2) vibre dans la direction de la largeur de manière telle que ses quatre parties d'extrémité portant les quatre éléments d'entraînement piézo-électriques (5) soient courbés symétriquement à la fois dans les directions horizontale et verticale, tel que vu de face ;
g) lesdits moyens de détection piézo-électriques comprenant quatre éléments de détection piézo-électriques (6) montés sur deux parois latérales opposées dudit moyen support (3) ; et
h) lesdits éléments de détection piézo-électriques (6) étant disposés de telle sorte que deux éléments en vis-à-vis l'un de l'autre d'un côté à l'autre dudit moyen support (3) sont de polarité opposée, et que deux éléments prévus sur la même paroi latérale dudit moyen support sont de polarité opposée l'un par rapport à l'autre.

2. Gyroscope à rotor vibrant selon la revendication 1 dans lequel ledit moyen support est une barre semblable à une plaque (3) pénétrant ledit moyen vibrant en forme de H (2) en son centre dans la direction de l'épaisseur.

3. Gyroscope à rotor vibrant selon la revendication 1 ou 2 dans lequel la fréquence de vibration naturelle selon le second mode dudit moyen support (3) coïncide avec la fréquence de vibration naturelle selon le premier mode.

4. Gyroscope à rotor vibrant selon l'une des revendications précédentes dans lequel une partie (4a) dudit boîtier (A) par laquelle ledit moyen support est supporté est fait d'un alliage résistant aux vibrations.

5. Gyroscope à rotor vibrant selon la revendication 4 dans lequel ladite partie (4a) est une partie médiane dudit boîtier (4).

6. Gyroscope à rotor vibrant selon la revendication 4 ou 5 dans lequel les parties de support dudit alliage résistant aux vibrations sont évasées, obtenant ainsi un contact linéaire avec ledit moyen support (3).
